# EUROPEAN PATENT SPECIFICATION

(11) **EP 4 418 739 B1**
(45) Date of publication and mention of the grant of the patent: **01.07.2026**
(21) Application number: 23156540.9
(22) Date of filing: 14.02.2023
(51) Int. Cl.: H04W 36/12

(54) **EXTENDING NETWORK SLICE AVAILABILITY TO A TARGET SERVICE AREA**
ERWEITERUNG DER NETZWERK-SLICE-VERFÜGBARKEIT AUF EIN ZIELGEBIET
EXTENSION DE LA DISPONIBILITÉ DES TRANCHES DE RÉSEAU À UNE ZONE DE SERVICE CIBLE

(43) Date of publication of application: 21.08.2024
(73) Proprietor: Deutsche Telekom AG, 53113 Bonn (DE)
(72) Inventor: ALEKSIEV, Vasil, 2200 Wien (AT)
(74) Representative: Schwöbel, Thilo K.

(56) References cited:
- EMMANOUIL PATEROMICHELAKIS ET AL: "Solution on predictive slice modification in edge based NSCE deployments", vol. 3GPP SA 6, no. Online; 20220622 - 20220701, 29 June 2022 (2022-06-29), XP052170678, Retrieved from the Internet <URL:https://www.3gpp.org/ftp/tsg_sa/WG6_MissionCritical/TSGS6_049-bis-e/Docs/S6-221863.zip S6-221863_was_S6-221721 -FS_NSCALE- Solution on predictive slice modification in edge based NSCE deployments.doc> [retrieved on 20220629]
- "3rd Generation Partnership Project; Technical Specification Group Services and System Aspects; Service Enabler Architecture Layer for Verticals (SEAL); Functional architecture and information flows; (Release 18)", no. V18.3.0, 23 December 2022 (2022-12-23), pages 1 - 246, XP052234800, Retrieved from the Internet <URL:https://ftp.3gpp.org/Specs/archive/23_series/23.434/23434-i30.zip 23434-i30.docx> [retrieved on 20221223]
- VASIL ALEKSIEV ET AL: "Inter-PLMN slice service continuity", vol. 3GPP SA 6, no. Athens, GR; 20230227 - 20230303, 21 February 2023 (2023-02-21), XP052238329, Retrieved from the Internet <URL:https://www.3gpp.org/ftp/tsg_sa/WG6_MissionCritical/TSGS6_053_Athens/Docs/S6-230779.zip S6-230779-Inter-PLMN slice service continuity .doc> [retrieved on 20230221]

## Description

### BACKGROUND

The present invention relates a method for using a user equipment in the framework of service enabler architecture layer for verticals, using a network slice capability enablement server, NSCE server, and a vertical application layer server, VAL server, and wherein the user equipment is a vertical application layer user equipment comprising a vertical application layer client, VAL client, and a network slice capability enablement client, NSCE client.

Additionally, the present invention relates to a system or telecommunications networks for using a user equipment in the framework of service enabler architecture layer for verticals, using a network slice capability enablement server, NSCE server, and a vertical application layer server, VAL server, wherein the user equipment is a vertical application layer user equipment comprising a vertical application layer client, VAL client, and a network slice capability enablement client, NSCE client.

Furthermore, the present invention relates to a program and to a computer-readable medium for using a user equipment in the framework of service enabler architecture layer for verticals according to the inventive method.

In conventionally known telecommunications networks, it is known to use a user equipment with a telecommunications network in relation to or in the framework of service enabler architecture layer for verticals, SEAL, with standardization document TR 23.700-99 having been finalized, by technical specification group services and system aspects, regarding application architecture aspects, solutions and enhancements regarding network slice capability exposure for application layer enablement, NSCALE, for enabling network slice capability exposure. In this document, architectural requirements and application architecture are identified to support the network slice capability exposure; topics cover, e.g., network slice capability management enhancements, application layer exposed network slice lifecycle management, discovery and registration aspects for management service exposure, network slice fault management capability, communication service management exposure, application layer quality-of-service verification capability enablement, network slice related performance and analytics exposure, support for requirements translation, support for trust enablement, support for managing trusted third-party owned application(s), dynamic network slice SLA (service level agreement) alignment, network slice capability exposure in the edge data network. It is furthermore referred to the disclosure of the following documents: EMMANOUIL PATEROMICHELAKIS ET AL: "Solution on predictive slice modification in edge based NSCE deployments", 3GPP DRAFT; S6-221863; 29 June 2022, XP052170678; 3GPP TS 23.434, no. VI 8.3.0 23 December 2022, XP052234800; and VASIL ALEKSIEV ET AL: "Inter-PLMN slice service continuity", 3GPP DRAFT; S6-230779; 21 February 2023, XP052238329.

However, regarding the service enabler architecture layer for verticals, and especially the use of network slice capability enablement server entities, it is supposed that a network slice (or different network slices) are provided by one and the same telecommunications network.

### SUMMARY

An object of the present invention is to provide a technically simple, effective and cost-effective solution for using a user equipment with first and second telecommunications networks having, or using, different network identifiers in relation to or in the framework of service enabler architecture layer for verticals, SEAL. A further object of the present invention is to provide a corresponding system or telecommunications networks or network slice capability enabler service provider, and a corresponding program and computer-readable medium.

The object of the present invention is achieved by a method according to claim 1.

According to the present invention, it is advantageously possible that a considered user equipment is able to be used with first and second telecommunications networks having, or using, different network identifiers in relation to or in the framework of service enabler architecture layer for verticals, SEAL.

In a conventional telecommunications network - especially conforming to current standardization documents TR 23.700-99 and TS 23.435 - the deployment of network slice capability enablement, especially by means of using a network slice capability enablement server or a plurality of network slice capability enablement servers, that is/are able to deal with, and especially to configure, more than one telecommunications network - especially telecommunications networks, such as public land mobile networks and/or standalone non-public networks (PLMN/SNPN) - is not dealt with.

According to the present invention, it is advantageously possible to be able to use a user equipment with first and second telecommunications networks. Especially, the user equipment is used with the first and second telecommunications networks sequentially but - especially in case of the user equipment roaming, e.g., in the second telecommunications network while having the first telecommunications network as its home network - both telecommunications networks could also be involved simultaneously.
This advantageously provides the possibility, in case, e.g., of a slice service provider (for example a hyperscaler) having bought network slices (network resource capacity) from a plurality, e.g. three, network operators (e.g. public land mobile network operators) in a single country and would like to offer such network slices to a network slice customer (e.g. a business which has subscriptions to all the three operators - and national roaming being applied): According to the present invention, it is advantageously possible to handle the network slice capacity from the three networks (e.g. public land mobile networks) in favor of the network slice customer.
Furthermore according to another example or use case, an enterprise could have two factories in different parts of a country and would want to deploy a first standalone non-public network (SNPN1) and a second standalone non-public network (SNPN2) on these different locations, respectively: According to the present invention, it is advantageously possible to be able to use one network slice capability enablement server to manage both these networks.
Furthermore according to another example or use case, a network operator could use one network slice capability enablement server to manage two public land mobile networks in different, e.g. neighboring, countries, in which case a common network slice capability enablement deployment is advantageously possible to be implemented for these two (or more than two) public land mobile networks in order to take care of providing specific customer experience/realization of key performance indicators, KPIs, to be covered in the roaming network; by means of such a deployment, the respective network resources could be managed entirely or partially.

It is especially advantageous, according to the present invention, that network slice capability enablement, as being part of application enabler layer (of a vertical application layer), is able to support various business-to-business business models in bringing more flexibility and possibility to offer additional slice services. The application enabler layer (or vertical application layer) is not part of the 5G core network that is typically involved and, especially, has the possibility to connect to multiple networks (if the respective SLA is present) and provide additional value.

According to the present invention, it is advantageously possible that a user equipment is used with first and second telecommunications networks having, or using, different network identifiers in relation to or in the framework of service enabler architecture layer for verticals, SEAL. The first and second telecommunications networks, respectively, provide the possibility (to the user equipment) to use specific network slices, i.e. (at least) a first specific network slice of the first telecommunications network and (at least) a second specific network slice of the second telecommunications network. These (at least) first and second specific network slices are able to be used, by the user equipment, via a network slice capability enablement server, NSCE server, in order to access a vertical application layer server, VAL server. The user equipment is (or needs to be) a vertical application layer user equipment, i.e. comprising a vertical application layer client, VAL client, and a network slice capability enablement client, NSCE client.
According to the present invention, the user equipment has a native subscription to the first telecommunications network (i.e. the first telecommunications network is the home network of the user equipment) but lacks a native subscription to the second telecommunications network (i.e. the second telecommunications network is not the home network of the user equipment). According to the present invention, in such a situation, in order to realize service continuity even in case that the user equipment is connected via the second telecommunications network only, in a first step, the vertical application layer server transmits a message to the network slice capability enablement server, thereby requesting an application service continuity requirement request, and in a second step, the network slice capability enablement server interacts with the first telecommunications network, the second telecommunications network, and the user equipment in view of realizing application service continuity to the user equipment.
In the context of the present invention, the terms vertical application layer server and network slice service customer are used (or should be understood to be used) synonymously.

According to the present invention, it is furthermore advantageously possible and preferred that the first telecommunications network is a public land mobile network or a standalone non-public network, and wherein the second telecommunications network is a public land mobile network or a standalone non-public network.

It is thereby advantageously possible to realize and implement the inventive method in a comparatively simple and efficient manner; especially, the present invention is applicable irrespective of whether a public land mobile network or a standalone non-public network is considered.

Furthermore, it is advantageously possible and preferred according to the present invention that the network slice capability enablement server is part of an application enabler layer, especially as part of a network slice capability enabler service provider, and wherein the network slice capability enablement server is, especially, neither part of the first telecommunications network nor of the second telecommunications network.

It is thereby advantageously possible to realize and implement the inventive method in a comparatively simple and efficient manner.

According to the present invention, it is furthermore advantageously possible and preferred that the vertical application layer server is a recognized user of network slice-related enablement capabilities regarding the first and second specific network slices.

It is thereby advantageously possible to realize and implement the inventive method in a comparatively simple and efficient manner.

Furthermore, it is advantageously possible and preferred according to the present invention that the network slice capability enablement server is
- part of or associated with the network slice capability enabler service provider , and
- connected to both the first telecommunications network and the second telecommunications network, especially via their respective operations and maintenance interface and/or network exposure function interface.

It is thereby advantageously possible to efficiently realize and implement the inventive method in a comparatively simple and flexible manner, and to only use one network slice capability enablement server (entity) communicating with both telecommunications networks.

Furthermore, it is advantageously possible and preferred according to the present invention that the application enabler layer, especially the network slice capability enabler service provider comprises - besides the network slice capability enablement server - a further network slice capability enablement server,
-- wherein both the network slice capability enablement server and the further network slice capability enablement server are part of or associated with the network slice capability enabler service provider, and
-- wherein the network slice capability enablement server is connected to the first telecommunications network and the further network slice capability enablement server is connected to the second telecommunications network, especially via their respective operations and maintenance interfaces and/or network exposure function interfaces.

It is thereby advantageously possible to realize and implement the inventive method in a comparatively simple and efficient manner by means of using a source network slice capability enablement server as well as a target network slice capability enablement server (entity).

Furthermore, it is advantageously possible and preferred according to the present invention that the network slice capability enablement server provides, or the network slice capability enablement server and the further network slice capability enablement server provide, for network slice life cycle management support, towards the vertical application layer server, regarding both the first specific network slice and the second specific network slice,
wherein especially the network slice capability enablement server, or both the network slice capability enablement server and the further network slice capability enablement server, thereby uses or use the respective network identifiers of the first and second telecommunications networks.

It is thereby advantageously possible to realize and implement the inventive method in a comparatively simple and efficient manner.

Furthermore, the present invention relates to a system or telecommunications networks or network slice capability enabler service provider according to claim 5.

Additionally, the present invention relates to a program comprising a computer readable program code which, when executed on a computer and/or on a user equipment and/or on a network node of a first telecommunications network and/or on a network node of a second telecommunications network and/or on a network node of a network slice capability enabler service provider, or in part on the user equipment and/or in part on the network node of the first telecommunications network and/or in part on the network node of the second telecommunications network, and/or in part on the network node of the network slice capability enabler service provider, causes the computer and/or the user equipment and/or the network node of the first telecommunications network and/or the network node of the second telecommunications network and/or the network node of the network slice capability enabler service provider to perform the inventive method.

Additionally, the present invention relates to a computer-readable medium comprising instructions which when executed on a computer and/or on a user equipment and/or on a network node of a first telecommunications network and/or on a network node of a second telecommunications network and/or on a network node of a network slice capability enabler service provider, or in part on the user equipment and/or in part on the network node of the first telecommunications network and/or in part on the network node of the second telecommunications network, and/or in part on the network node of the network slice capability enabler service provider, causes the computer and/or the user equipment and/or the network node of the first telecommunications network and/or the network node of the second telecommunications network and/or the network node of the network slice capability enabler service provider to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

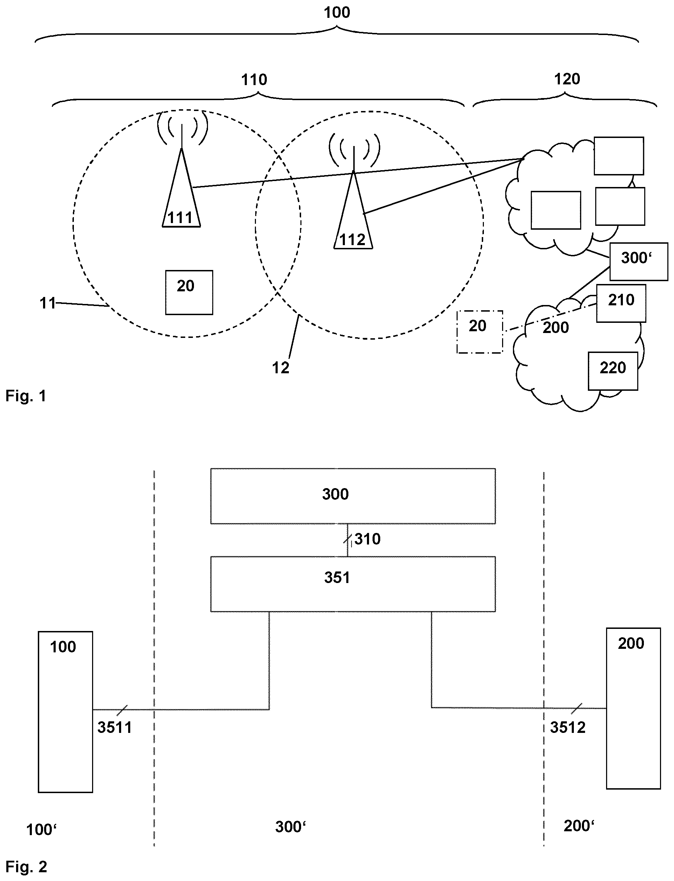

Figure 1 schematically illustrates a telecommunications network, comprising an access network and a core network, as well as a further telecommunications network, also comprising an access network and a core network, and a user equipment, wherein the user equipment uses services provided by a vertical application layer server or a network slice capability enabler service provider being typically external to both the first and the second telecommunications networks, wherein the network slice capability enabler service provider comprises a vertical application layer server and at least one network slice capability enablement server to provide services to the user equipment - either using the first telecommunications network or the second telecommunications network. Instead of the vertical application layer server (or is connected to a vertical application layer server as part of another domain)
Figure 2 schematically illustrates a representation of an exemplary implementation of the vertical application layer server and of the network slice capability enabler service provider together with both the first and second telecommunications networks or the first and second telecommunications network domains, respectively.

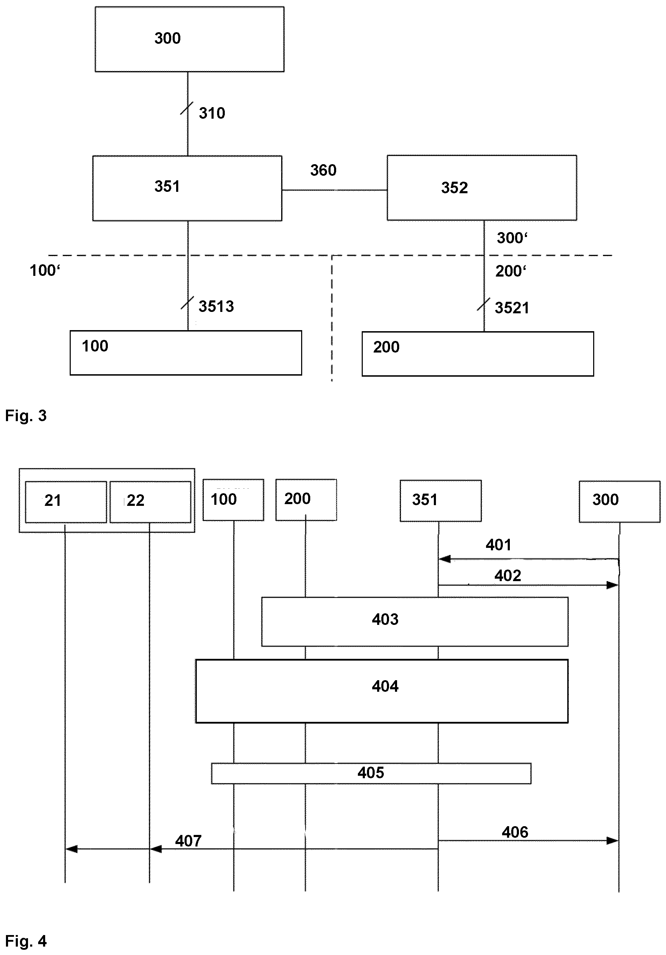

Figure 3 schematically illustrates a representation of a further exemplary implementation of the vertical application layer server and of the network slice capability enabler service provider together with both the first and second telecommunications networks or the first and second telecommunications network domains, respectively.
Figure 4 schematically illustrates a communication diagram between the user equipment, the first telecommunications network, the second telecommunications network, the network slice capability enablement server and the vertical application layer server regarding the exemplary implementation of the present invention represented in Figure 2.

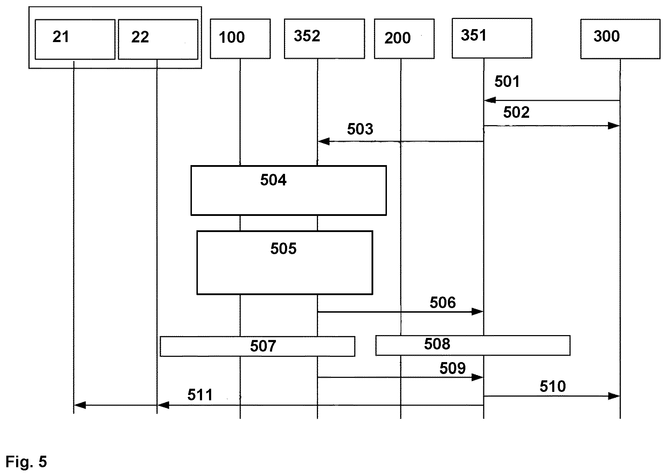

Figure 5 schematically illustrates a communication diagram between the user equipment, the first telecommunications network, the second telecommunications network, the network slice capability enablement server, a further network slice capability enablement server and the vertical application layer server regarding the exemplary implementation of the present invention represented in Figure 3.

The parts of the description which relate to Figures 2 and 4 do not describe the claimed invention and are present for illustration purposes only.

### DETAILED DESCRIPTION

The present invention will be described with respect to particular embodiments and with reference to certain drawings, but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a telecommunications network 100, comprising an access network 110 and a core network 120, as well as a further telecommunications network 200, likewise comprising an access network 210 and a core network 220, and a user equipment 20 is schematically shown. The user equipment 20 uses services provided by a vertical application layer, VAL, service provider domain or network slice capability enabler service provider 300' being typically external to both the first and the second telecommunications networks 100, 200, wherein the network slice capability enabler service provider 300' comprises a vertical application layer server (not separately shown in Figure 1) and at least one network slice capability enablement server (not separately shown in Figure 1) to provide services to the user equipment 20 - either using the first telecommunications network 100 or, alternatively, and represented using dot-dash lines, using the second telecommunications network 200. The first telecommunications network 100, as well as the second telecommunications network 200, is especially realized as mobile (cellular) communication networks 100, 200. Both the first telecommunications network 100 and the second telecommunications network 200, especially the respective core networks 120, 220, typically comprise a number of network functions or services that are, however and for the sake of simplification, not explicitly and separately indicated, in Figure 1, by means of reference signs. The (first) access network 110 (of the first telecommunications network 100) exemplary comprises a plurality of radio cells 11, 12. In the exemplary situation or scenario shown in Figure 1, a first base station entity 111 generates or is associated with or spans the first radio cell 11, and a second base station entity 112 generates or is associated with or spans the second radio cell 12. In the exemplary situation shown in Figure 1, the user equipment 20 (if connected to or with the first telecommunications network 100) is connected, via a radio interface or air interface, to the first base station entity 111 of the access network 110 of the first telecommunications network 100.
If the user equipment 20 is connected to the second telecommunications network 200 (schematically represented, in Figure 1, by means of using dot-dash lines), the user equipment 20 is likewise connected, via a radio interface or air interface, to a base station entity (not separately shown in Figure 1 by means of a reference sign) of the (second) access network 210 of the second telecommunications network 200.
According to the present invention, the user equipment 20 is a vertical application layer user equipment 20, especially comprising a vertical application layer client, VAL client, (not separately shown in Figure 1 by means of a reference sign) and a network slice capability enablement client, NSCE client (not separately shown in Figure 1 by means of a reference sign).
Furthermore, the user equipment 20 is typically, but not necessarily, mobile - i.e. able to move - with respect to the - typically, but not necessarily, static - radio cells 11, 12 or corresponding base station entities 111, 112 of the (first) access network 110 (and as well of the (second) access network 210.
Especially, the user equipment 20 might comprise an application (not specifically depicted in Figure 1) as part of the user equipment 20; the application typically runs on the user equipment 20, i.e. the user equipment 20 typically runs or executes an operating system (such as a mobile (devices) operating system, e.g., android, iOS, iPadOS, etc.), and the application is running on the operating system; alternatively, the application might also be a lower level application not running on or as part of the operating system but as part of, e.g., the subscriber identity module of the user equipment 20.

According to the present invention, it is advantageously possible to use the user equipment 20 in relation to or in the framework of service enabler architecture layer for verticals, SEAL, with (either sequentially or in parallel) the first telecommunications network 100 and the second telecommunications networks 200, these telecommunications networks 100, 200 having, or using, different network identifiers.

Typically, the first telecommunications network 100 provides the user equipment 20 to use at least a first specific network slice, and the second telecommunications network 200 provides the user equipment 20 to use at least a second specific network slice, to the network slice capability enabler service provider 300' (which network slice capability enabler service provider 300' especially comprises a vertical application layer server, VAL server - either as part of the network slice capability enabler service provider 300' or as part of another domain (which vertical application layer server is not explicitly shown in Figure 1 but hinted at in Figures 2 and 3, either as part of the network slice capability enabler service provider 300' or as part of another domain).

In Figure 2, a representation of an exemplary implementation of the vertical application layer server 300 and of the network slice capability enabler service provider 300' together with both the first and second telecommunications networks 100, 200 or the first and second telecommunications network domains 100', 200', respectively, is schematically shown.
According to the implementation shown in Figure 2, the first and second specific network slices are used, or provided, via a single network slice capability enablement server, NSCE server, 351, to the vertical application layer server, VAL server, 300, hence the vertical application layer server 300 is able to be understood as a vertical application layer network slice service customer, and the vertical application layer server 300 and the (single) network slice capability enablement server 351 could be part of the same domain (network slice capability enabler service provider 300') or could be realized as part of different domains. The (single) network slice capability enablement server 351 has, or realizes, both an interface to the first telecommunications network 100 (or the first telecommunications network domain 100') and to the second telecommunications network 200 (of the second telecommunications network domain 200'). Between the vertical application layer server 300 and the (single) network slice capability enablement server 351, an interface or reference point 310 is realized, especially of the type NSCE-S (network slice capability enablement server) according to clause 7.4.4 of TS 23.435 V0.5.0, this NSCE-S interface or reference point especially being an instance of the CAPIF-2 (common API (application programming interface) framework)-2 reference point according to TS 23.222, i.e. which exists between the API invoker and the API exposing function belonging to the same trust domain, and which is used for the API invoker to communicate with the service APIs.

According to the exemplary implementation shown in Figure 2, the network slice capability enablement server 351 has or comprises an interface (or reference point) or, a first network interface, 3511 to the first telecommunications network 100, and, as well, an interface (or reference point) or, a second network interface, 3512 to the second telecommunications network 200 (and, if applicable and present, potentially also further interfaces to still further telecommunications networks (not shown in Figure 2) in case more than two telecommunications networks are involved). These interfaces or reference points (or first and second network interfaces) 3511, 3512 of the (single) network slice capability enablement server 351 to the first and second telecommunications networks, 100, 200, respectively, are especially realized, respectively, as N33 reference points (supporting interactions between the network slice capability enablement server and the network exposure function of the respective telecommunications network 100, 200) and/or as NSCE-OAM reference points (i.e. the interface between the network slice capability enablement server and the operations and maintenance system of the respective telecommunications network 100, 200).

In Figure 3, a representation of a further exemplary implementation of the vertical application layer server 300 and of the network slice capability enabler service provider 300' together with both the first and second telecommunications networks 100, 200 or the first and second telecommunications network domains 100', 200', respectively, is schematically shown.
According to the implementation shown in Figure 3, the first and second specific network slices are used, or provided, - not via a single network slice capability enablement server, NSCE server, 351 as shown in Figure 2 - but via both a network slice capability enablement server, NSCE server, 351 and a further network slice capability enablement server 352 to the vertical application layer server, VAL server, 300, hence, again, the vertical application layer server 300 is able to be understood as a vertical application layer network slice service customer, and the vertical application layer server 300 and the first and second network slice capability enablement servers 351, 352 could be part of the same domain (network slice capability enabler service provider 300') or could be realized as part of different domains. In the exemplary situation shown in Figure 3 (and without limiting the generality), the network slice capability enablement server 351 has, or realizes, an interface to the first telecommunications network 100 (or the first telecommunications network domain 100'), and the further network slice capability enablement server 352 has, or realizes, an interface to the second telecommunications network 200 (of the second telecommunications network domain 200'). Between the vertical application layer server 300 and the network slice capability enablement server 351, an interface or reference point 310 is realized, especially of the type NSCE-S in a manner analogous to the description of Figure 2.

According to the exemplary implementation shown in Figure 3, the network slice capability enablement server 351 has or comprises an interface (or reference point) 3513 to the first telecommunications network 100, and the further network slice capability enablement server 352 has or comprises an interface (or reference point) 3522 to the second telecommunications network 200; if applicable and present, potentially also further network slice capability enablement servers might exist, interfacing to still further telecommunications networks (not shown in Figure 3) in case more than two telecommunications networks are involved. This interface or reference point 3513 of the network slice capability enablement server 351 to the first telecommunications network 100, and this interface or reference point 3522 of the further network slice capability enablement server 352 to the second telecommunications network 100 is especially realized, respectively, as an N33 reference point (supporting interactions between the network slice capability enablement server and the network exposure function of the respective telecommunications network 100, 200) and/or as an NSCE-OAM reference point (i.e. the interface between the network slice capability enablement server and the operations and maintenance system of the respective telecommunications network 100, 200).
Furthermore, Figure 3 shows an interface or reference point 360 between the network slice capability enablement server 351 and the further network slice capability enablement server 352: Especially, this interface or reference point 360 is of the NSCE-E type, i.e. serving the interactions between the network slice capability enablement servers 351, 352, especially supporting information collection.
In the context of the present invention, in case that two network slice capability enablement server 351, 352 are used as shown in Figure 3, the network slice capability enablement server 351 is also called source network slice capability enablement server 351, and the further network slice capability enablement server 352 is also called target network slice capability enablement server 352.

Regarding both the implementation according to Figure 2 and according to Figure 3, the network slice capability enablement server 351 (or network slice capability enablement servers 351, 352) are able to be owned by the (network) slice capability enabler service provider (or the service provider domain 300') and connected to the OAM/NEF interfaces 3511, 3512, 3513, 3522 of the two telecommunications networks 100, 200 (especially two PLMNs), which are, especially, providing national roaming in a country. A (first) network operator (MNO1) operates the first telecommunications network 100 (PLMN1) and has a contract or service level agreement (SLA1) which clarifies the usage of the resources of certain network slices (e.g. of the first specific network slice of the first telecommunications network 100) to be managed by the (network) slice capability enabler service provider 300'. A further (or second) network operator (MNO2) operates the second telecommunications network 200 (PLMN2) and has a contract or service level agreement (SLA2) which clarifies usage of the resources of certain network slices (e.g. of the second specific network slice of the second telecommunications network 200) to be managed by (network) slice capability enabler service provider 300'. Vertical application layer slice service customer (vertical application layer server 300) acts as a third party consuming network slice resources offered by (network) slice capability enabler service provider 300'.

The vertical application layer network slice service customer (i.e. the vertical application layer server 300) is able to subscribe for NS_LCM (network slice lifecycle management) subscribe request and request network slice lifecycle management from the NSCE server (slice service provider) 351 (or 351, 352) according to clause 9.4 of TS23.435 v0.5.0. As the vertical application layer server 300 is aware about the service provided from the network resources of the telecommunications networks 100, 200, it is able to indicate the respective network identifier (of the intended telecommunications network 100, 200) in its requests and respectively the (single) network slice capability enablement server 351 (cf. Figure 2) or the network slice capability enablement servers 351, 352 (cf. Figure 3) could interact with the respective network's OAM/NEF (i.e. of PLMN1 or PLMN2). Via interface NSCE-S, it is possible to provide for lifecycle management managing the dedicated (first and second specific) network slices of PLMN1 and PLMN2. As result, also respective APIs for slice management would support dealing with multiple telecommunications networks, especially PLMNs.
Especially according to the present invention, the vertical application layer server 300 (slices customer, consuming NSCE services) is able to use network slice optimization based on the vertical application layer server policy (cf. clause 9.5 of TS23.435 v0.5.0). Respectively, vertical application layer server 300 can provide policy per PLMN or policy per SNPN. The network slice capability enablement server 351 in case of a configuration shown in Figure 2 (or the source and target network slice capability enablement servers 351, 352 in case of a configuration shown in Figure 3) could follow up and take care the respective policy is implemented per PLMN/SNPN. As result also the respective APIs for network slice optimization based on policy would support multi-network deployment.
Furthermore according to the present invention, the vertical application layer server 300 (or slices customer) consuming NSCE services can use discovery of management service exposure: Respectively, vertical application layer server 300 can discover management services (MnS) of the telecommunications networks 100, 200, PLMN1 and PLMN2. Then, the OAM/MnS registry of each telecommunications network (especially PLMN) derives the details to be exposed based on the NSCE server permissions and provides the list of management services (MnS) for the given slice and the access details via the (single) network slice capability enablement server 351 (or the source and target network slice capability enablement servers 351, 352) to the vertical application layer server 300. According to the present invention, in case of OAM triggered new/modified MnS discovery, the OAM will indicate its network identifier (or PLMN ID). As a result, also the respective APIs for VAL triggered MnS discovery and OAM triggered MnS discovery support multi-network deployment.

The vertical application layer network slice service customer (or vertical application layer server 300) has a certain number of user equipments (such as user equipment 20) having subscription to PLMN1 (i.e. the user equipment 20 - being a vertical application layer user equipment 20 comprising a vertical application layer client 21 and a network slice capability enablement client 22 (cf. Figures 4 and 5) - has a native subscription to the first telecommunications network 100 PLMN1 but lacks a native subscription to the second telecommunications network 200 PLMN2); in case that national roaming is enabled/allowed by the regulator (which is, e.g., the case in the USA), these user equipments have a subscription to a specific slice (SNSSAI1) (of the first telecommunications network 100, PLMN1) which is created/managed in PLMN1 and to S-NSSAI2/PLMN2 via the subscription information and roaming agreement between PLMNs. The respective network slice capability enablement server 351, 352 manages S-NSSAIs in both telecommunications networks 100, 200, making sure these user equipments have sufficient quality in receiving S-NSSAls services when roaming (especially in the second telecommunications network 200) or in the home network (especially in the first telecommunications network 100).
When the user equipment 20 (or a group of user equipments) migrates from one PLMN1 to another PLMN2, then this would mean migrating from one slice service area of slice1/PLMN1 to another slice service area of slice 2/PLMN2. The vertical application layer server 300 has subscribed to the network slice capability enablement server 351. The vertical application layer user equipment 20 has subscription to PLMN1/slice1 and PLMN2/slice2. The vertical application layer client 21 of vertical application layer user equipment 20 is mapped to Slice#1/PLMN1, and network slice capability enablement client 22 of vertical application layer user equipment 20 has established a connection to the network slice capability enablement server 351. The network slice capability enablement server 351 (and/or the further network slice capability enablement server 352) has already discovered the target network slice service area of PLMN2/slice2 and its area of coverage. The vertical application layer server 300 is subscribed to and received prediction of user equipment location change regarding the user equipment 20 (or regarding the plurality of user equipments).

Hence according to the present invention, it is advantageously possible to realize service continuity or application service continuity (even in case that the user equipment 20 is connected via the second telecommunications network 200 only) by means of the vertical application layer server 300 transmitting a message to the network slice capability enablement server 351 (and/or to the further network slice capability enablement server 352), thereby requesting an application service continuity requirement request, and by means of the network slice capability enablement server 351 (and/or the further network slice capability enablement server 352) interacting with the first telecommunications network 100, the second telecommunications network 200, and/or the user equipment 20 in view of realizing application service continuity to the user equipment 20.

In Figure 4, a communication diagram between the user equipment 20 (especially the vertical application layer client 21 thereof and the network slice capability enablement client 22 thereof), the first telecommunications network 100, the second telecommunications network 200, the network slice capability enablement server 351 and the vertical application layer server 300 is schematically shown regarding the exemplary implementation of the present invention represented in Figure 2.
In a first processing step 401, the vertical application layer server 300 sends to the (single) network slice capability enablement server 351 (also called source network slice capability enablement server 351, S-NSCE server) an inter-PLMN application service continuity requirement request (i.e. the message to the network slice capability enablement server 351 (and/or to the further network slice capability enablement server 352), thereby requesting an application service continuity requirement request) due to predicted/expected user equipment or group user equipment mobility from source service area of slice1 in PLMN1 to a target service area covered by a different slice service area in slice#2/PLMN2. Such user equipment predicted mobility (of user equipment 20) at the vertical application layer server 300 can be based on user equipment mobility analytics received by network data analytics function, NWDAF, or can be predicted by the vertical application layer (either the vertical application layer server 300 or the vertical application layer user equipment 20). In a second processing step 402, the (single or source) network slice capability enablement server 351 sends an inter-PLMN application service continuity requirement response to the vertical application layer server 300 as positive or negative acknowledgement depending on its capability to provide such service serving both areas/slices in both PLMNs 100, 200. In a third processing step 403, the network slice capability enablement server 351 determines to query the underlying 5G system (i.e. the second telecommunications network 200) on the slice availability and conditions at the target service area/slice2/PLMN2 (based on the requirement in the first processing step 401). Such query may be in form of a request/response and include:
a. network slice capability enablement server 351 interacting with 5GC (5G core) /PLMN2 to query the user equipment's 20 specific information (location, user equipment's 20 connection capabilities) as well as network conditions (network monitoring from network exposure function) and/or network slice related analytics on the network slice load (especially from network data analytics function as, e.g., specified in TS 23.288);
b. network slice capability enablement server 351 may also interact with OAM/PLMN2 to query on the target slice availability and the up-to-date configured network slice parameters, e.g. network slice RRM (radio resource management) policies, modification of the NSI/NSSI (network slice instance/network slice subnet instance) resources (cf. TS 28.531, clause 5.1.12) at the target service area and measurements for the network slice at the target area. In a fourth processing step 404, the network slice capability enablement server 351 determines the need for a slice lifecycle change at the slice target area (of the second telecommunications network 200) and translates this to a trigger action; this trigger action can be based on the outcome of the third processing step 403 and can be a requested slice modification (slice2/PLMN2) or creation/instantiation of a new network slice at the target area (this may happen if a group of user equipments are moving to the target area and the requested slice2 is missing in the target area); if a comparatively big number of user equipments are migrating from PLMN1 to PLMN2, there might be a need to further modify/reduce the respective slice resources of PLMN1.
In a fifth processing step 405, the network slice capability enablement server 351 sends the trigger action as a slice modification trigger request to the slice provisioning MnS (management service) producer at OAM/PLMN2 (e.g. slice modification for network slice) to extend network slice availability to the target service area based on the expected/predicted vertical application layer user equipment or vertical application layer group mobility; as a response to the trigger action, the provisioning MnS producer provides a network slice modification trigger response to the corresponding network slice capability enablement server 351 with a positive or negative result; if there is a need for optimizing of slice resources of slice1/PLMN1, then there is a trigger request to the slice provisioning MnS producer at OAM/PLMN1 (e.g. network slice modification for network slice) to decrease network slice availability to the source area after the user equipments have migrated.
In sixth and seventh processing steps 406, 407, after the network slice lifecycle change execution (based on the indication in the fifth processing step 405), the (single or source) network slice capability enablement server 351 sends a notification to the vertical application layer server 300 (sixth processing step 406) and optionally (seventh processing step 407) to the vertical application layer client 21, via network slice capability enablement client 22. However, according to the present invention, a different approach is possible, e.g. by means of adding a network indicator (or network identifier), PLMN/SNPN indicator, as an additional information element.

Furthermore, according to the present invention, the procedure as shown in Figure 4 can be further modified in that there is the source network slice capability enablement server 351 and the target network slice capability enablement server 352 where negotiation is sent between both in order to provide the needed service at the target area/slice2/PLMN2; this is exemplarily shown and represented in Figure 5.

In Figure 5, likewise a communication diagram between the user equipment 20 (especially the vertical application layer client 21 thereof and the network slice capability enablement client 22 thereof), the first telecommunications network 100, the second telecommunications network 200, the network slice capability enablement server 351 (or source network slice capability enablement server 351), a further network slice capability enablement server 352 (or target network slice capability enablement server 352) and the vertical application layer server 300 is schematically shown regarding the exemplary implementation of the present invention represented in Figure 3.
In a first processing step 501, the vertical application layer server 300 sends to the (source) network slice capability enablement server 351 (S-NSCE server) an inter-PLMN application service continuity requirement request (i.e. the message to the network slice capability enablement server 351 (and/or to the further network slice capability enablement server 352), thereby requesting an application service continuity requirement request) due to predicted/expected user equipment or group user equipment mobility from source service area of slice1 in PLMN1 to a target service area covered by a different slice service area in slice#2/PLMN2. Such user equipment predicted mobility (of user equipment 20) at the vertical application layer server 300 can be based on user equipment mobility analytics received by network data analytics function, NWDAF, or can be predicted by the vertical application layer (either the vertical application layer server 300 or the vertical application layer user equipment 20).
In a second processing step 502, the (source) network slice capability enablement server 351 sends an inter-PLMN application service continuity requirement response to the vertical application layer server 300 as positive or negative acknowledgement depending on its capability to provide such service serving both areas/slices in both PLMNs 100, 200.
In a third processing step 503, the source network slice capability enablement server 351 queries the target network slice capability enablement server 352 (especially by means of an inter-PLMN service continuity negotiation request) on the network slice availability and conditions at the target service area/slice2/PLMN2 (based on the requirement in the first processing step 501).
In a fourth processing step 504, the target network slice capability enablement server 352 checks with PLMN2/OAM2 the target network slice availability, network slice load, network slice analytics and the up-to-date configured network slice parameters, e.g. network slice RRM (radio resource management) policies, modification of the NSI/NSSI (network slice instance/network slice subnet instance) resources (cf. TS 28.531, clause 5.1.12) at the target service area and measurements for the network slice at the target area.
In a fifth processing step 505, the target network slice capability enablement server 352 determines the need for a network slice lifecycle change at the network slice target area (of the second telecommunications network 200) and translates this to a trigger action; this trigger action can be based on the outcome of the fourth processing step 504 and can be a requested network slice modification (slice2/PLMN2) or creation/instantiation of a new network slice at the target area (this may happen if a group of user equipments are moving to the target area and the requested slice2 is missing in the target area).
In a sixth processing step 506, the target network slice capability enablement server 352 sents the source network slice capability enablement server 351 (inter-PLMN service continuity negotiation reply) on the network slice availability and conditions at the target service area/slice2/PLMN2 (based on the requirement in the third processing step 503).
In a seventh and eighth processing steps 507, 508, the target network slice capability enablement server 352 sends the trigger action as a network slice modification trigger request to the slice provisioning MnS (management service) producer at OAM/PLMN2 - seventh processing step 507 - (e.g. network slice modification for network slice) to extend network slice availability to the target service area based on the expected/predicted vertical application layer user equipment or vertical application layer group mobility; as a response to the trigger action, the provisioning MnS producer provides a network slice modification trigger response to the corresponding target network slice capability enablement server 352 with a positive or negative result; if there is a need for optimizing of slice resources of slice1/PLMN1, then there is a trigger request from the source network slice capability enablement server 351 to the slice provisioning MnS producer at OAM/PLMN1 - eighth processing step 508 - (e.g. network slice modification for network slice) to decrease network slice availability to the source area after the user equipments have migrated.
In ninth, tenth and eleventh processing steps 409, 410, 411, after the network slice lifecycle change execution (based on the indication in the fifth processing step 505), the target network slice capability enablement server 352 sends a notification to the source network slice capability enablement server 351 - ninth processing step 509 -, the source network slice capability enablement server 351 sends a notification to the vertical application layer server 300 (tenth processing step 510) and (eleventh processing step 511) to the vertical application layer client 21, via network slice capability enablement client 22.

## Claims

1. Method for using a user equipment (20) with first and second telecommunications networks (100, 200) having, or using, different network identifiers in relation to or in the framework of service enabler architecture layer for verticals, SEAL,
wherein the first and second telecommunications networks (100, 200) provide the possibility to use specific network slices, a first specific network slice of the first telecommunications network (100) and a second specific network slice of the second telecommunications network (200), via a network slice capability enablement server, NSCE server, (351), and via a further network slice capability enablement server (352), to a vertical application layer server, VAL server, (300), and wherein the user equipment (20) is a vertical application layer user equipment (20) comprising a vertical application layer client, VAL client, (21) and a network slice capability enablement client, NSCE client, (22), wherein the network slice capability enablement server (351) and/or the further network slice capability enablement server (352) is part of or associated with a network slice capability enablement service provider (300'), and connected to both the first telecommunications network (100) and the second telecommunications network (200) via their respective operations and maintenance interface and/or network exposure function interface (3511, 3512),
wherein the user equipment (20) has a native subscription to the first telecommunications network (100) but lacks a native subscription to the second telecommunications network (200),
wherein, in order to realize service continuity even in case that the user equipment (20) is connected via the second telecommunications network (200) only, the method comprises the following steps:
-- in a first step (501), the vertical application layer server (300) transmits a message to the network slice capability enablement server (351), thereby requesting an application service continuity requirement request due to predicted user equipment mobility from source service area,
-- in a second step, the network slice capability enablement server (351) interacts with the first telecommunications network (100), the second telecommunications network (200), and the user equipment (20) and the further network slice capability enablement server (352) in view of realizing application service continuity to the user equipment (20), wherein the interaction between the network slice capability enablement server (351) and the first and second telecommunications network (100, 200) and the further network slice capability enablement server (352) is carried out via their respective operations and maintenance interface and/or network exposure function interface (3511, 3512), wherein the network slice capability enablement server (351) queries (503) the further network slice capability enablement server (352) on availability of the second specific network slice and conditions at the second specific network slice, and wherein the further network slice capability enablement server (352)
-- determines (505) the need for a network slice lifecycle change at the network slice target area of the second telecommunications network 200 as well as translates this to a trigger action that is a requested network slice modification or creation of a new network slice at the target area, and
-- sends (506) the network slice capability enablement server (351) the availability of the second specific network slice and conditions at the second specific network slice, and
-- sends the trigger action as a network slice modification trigger request to a slice provisioning management service producer at the second telecommunications network (200).

2. Method according to claim 1, wherein the first telecommunications network (100) is a public land mobile network or a standalone non-public network, and wherein the second telecommunications network (200) is a public land mobile network or a standalone non-public network.

3. Method according to one of the preceding claims, wherein the vertical application layer server (300) is a recognized user of network slice-related enablement capabilities regarding the first and second specific network slices.

4. Method according to one of the preceding claims, wherein the network slice capability enablement server (351) provides, or the network slice capability enablement server (351) and the further network slice capability enablement server (352) provide, for network slice life cycle management support, towards the vertical application layer server (300), regarding both the first specific network slice and the second specific network slice,
wherein especially the network slice capability enablement server (351), or both the network slice capability enablement server (351) and the further network slice capability enablement server (352), thereby uses or use the respective network identifiers of the first and second telecommunications networks (100, 200).

5. System or telecommunications networks (100, 200) or network slice capability enablement service provider (300') for using a user equipment (20) with first and second telecommunications networks (100, 200) having, or using, different network identifiers in relation to or in the framework of service enabler architecture layer for verticals, SEAL,
wherein the first and second telecommunications networks (100, 200) provide the possibility to use specific network slices, a first specific network slice of the first telecommunications network (100) and a second specific network slice of the second telecommunications network (200), via a network slice capability enablement server, NSCE server, (351), and via a further network slice capability enablement server (352) to a vertical application layer server, VAL server, (300) that is a recognized user of network slice-related enablement capabilities regarding the first and second specific network slices, and wherein the user equipment (20) is a vertical application layer user equipment (20) comprising a vertical application layer client, VAL client, (21) and a network slice capability enablement client, NSCE client, (22), wherein the network slice capability enablement server (351) and/or the further network slice capability enablement server (352) is part of or associated with a network slice capability enablement service provider (300'), and connected to both the first telecommunications network (100) and the second telecommunications network (200) via their respective operations and maintenance interface and/or network exposure function interface (3511, 3512), 3512),
wherein the user equipment (20) has a native subscription to the first telecommunications network (100) but lacks a native subscription to the second telecommunications network (200),
wherein, in order to realize service continuity even in case that the user equipment (20) is connected via the second telecommunications network (200) only, the system or telecommunications networks (100, 200) or network slice capability enablement service provider (300') is configured such that:
-- the vertical application layer server (300) transmits a message to the network slice capability enablement server (351), thereby requesting an application service continuity requirement request,
-- the network slice capability enablement server (351) interacts with the first telecommunications network (100), the second telecommunications network (200), and the user equipment (20) and the further network slice capability enablement server (352) in view of realizing application service continuity to the user equipment (20), wherein the interaction between the network slice capability enablement server (351) and the first and second telecommunications network (100, 200) is carried out via their respective operations and maintenance interface and/or network exposure function interface (3511, 3512), wherein the network slice capability enablement server (351) queries (503) the further network slice capability enablement server (352) on availability of the second specific network slice and conditions at the second specific network slice, and wherein the further network slice capability enablement server (352)
-- determines (505) the need for a network slice lifecycle change at the network slice target area of the second telecommunications network 200 as well as translates this to a trigger action that is a requested network slice modification or creation of a new network slice at the target area, and
-- sends (506) the network slice capability enablement server (351) the availability of the second specific network slice and conditions at the second specific network slice, and
-- sends the trigger action as a network slice modification trigger request to a slice provisioning management service producer at the second telecommunications network (200).

6. Program comprising a computer readable program code which, when executed on a computer and/or on a user equipment (20) and/or on a network node of a first telecommunications network (100) and/or on a network node of a second telecommunications network (200) and/or on a network node of a network slice capability enablement service provider (300'), or in part on the user equipment (20) and/or in part on the network node of the first telecommunications network (100) and/or in part on the network node of the second telecommunications network (200), and/or in part on the network node of the network slice capability enablement service provider (300'), causes the computer and/or the user equipment (20) and/or the network node of the first telecommunications network (100) and/or the network node of the second telecommunications network (200) and/or the network node of the network slice capability enablement service provider (300') to perform a method according one of claims 1 to 4.

7. Computer-readable medium comprising instructions which when executed on a computer and/or on a user equipment (20) and/or on a network node of a first telecommunications network (100) and/or on a network node of a second telecommunications network (200) and/or on a network node of a network slice capability enablement service provider (300'), or in part on the user equipment (20) and/or in part on the network node of the first telecommunications network (100) and/or in part on the network node of the second telecommunications network (200), and/or in part on the network node of the network slice capability enablement service provider (300'), causes the computer and/or the user equipment (20) and/or the network node of the first telecommunications network (100) and/or the network node of the second telecommunications network (200) and/or the network node of the network slice capability enablement service provider (300') to perform a method according to one of claims 1 to 4.

## Patentansprüche

1. Verfahren zur Verwendung eines Nutzendgeräts (20) mit einem ersten und einem zweiten Telekommunikationsnetz (100, 200), die unterschiedliche Netzkennungen aufweisen oder verwenden, im Zusammenhang mit oder im Rahmen der Dienst-Enabler-Architekturschicht für Vertikale, SEAL,
wobei das erste und das zweite Telekommunikationsnetz (100, 200) die Möglichkeit bieten, spezifische Netzscheiben zu nutzen, eine erste spezifische Netzscheibe des ersten Telekommunikationsnetzes (100) und eine zweite spezifische Netzscheibe des zweiten Telekommunikationsnetzes (200), über einen Netzscheiben-Fähigkeits-Aktivierungsserver, NSCE-Server, (351) und über einen weiteren Netzscheiben-Fähigkeits-Aktivierungsserver (352), zu einem Vertikalanwendungsschicht-Server, VAL-Server, (300), und wobei das Nutzendgerät (20) ein Vertikalanwendungsschicht-Nutzendgerät (20) ist, das einen Vertikalanwendungsschicht-Client, VAL-Client, (21) und einen Netzscheiben-Fähigkeits-Aktivierungsclient, NSCE-Client, (22) umfasst, wobei der Netzscheiben-Fähigkeits-Aktivierungsserver (351) und/oder der weitere Netzscheiben-Fähigkeits-Aktivierungsserver (352) Teil eines Netzscheiben-Fähigkeits-Aktivierungsdienstanbieters (300') ist oder mit diesem verbunden ist und mit dem ersten Telekommunikationsnetz (100) und dem zweiten Telekommunikationsnetz (200) jeweils über deren Betriebs- und Wartungsschnittstelle und/oder Netzexpositionsfunktions-Schnittstelle (3511, 3512) verbunden ist,
wobei das Nutzendgerät (20) eine native Subskription zum ersten Telekommunikationsnetz (100) besitzt, jedoch keine native Subskription zum zweiten Telekommunikationsnetz (200) hat,
wobei, um Dienstkontinuität auch für den Fall zu gewährleisten, dass das Nutzendgerät (20) ausschließlich über das zweite Telekommunikationsnetz (200) verbunden ist, das Verfahren die folgenden Schritte umfasst:
- in einem ersten Schritt (501) übermittelt der Vertikalanwendungsschicht-Server (300) eine Nachricht an den Netzscheiben-Fähigkeits-Aktivierungsserver (351) und stellt dabei eine Anforderungsanfrage zur Anwendungsdienstkontinuität aufgrund einer vorhergesagten Mobilität des Nutzendgeräts vom Quell-Dienstbereich;
- in einem zweiten Schritt interagiert der Netzscheiben-Fähigkeits-Aktivierungsserver (351) mit dem ersten Telekommunikationsnetz (100), dem zweiten Telekommunikationsnetz (200), dem Nutzendgerät (20) und dem weiteren Netzscheiben-Fähigkeits-Aktivierungsserver (352) im Hinblick auf die Realisierung von Anwendungsdienstkontinuität für das Nutzendgerät (20), wobei die Interaktion zwischen dem Netzscheiben-Fähigkeits-Aktivierungsserver (351) und dem ersten und zweiten Telekommunikationsnetz (100, 200) sowie dem weiteren Netzscheiben-Fähigkeits-Aktivierungsserver (352) jeweils über deren Betriebs- und Wartungsschnittstelle und/oder Netzexpositionsfunktions-Schnittstelle (3511, 3512) erfolgt, wobei der Netzscheiben-Fähigkeits-Aktivierungsserver (351) den weiteren Netzscheiben-Fähigkeits-Aktivierungsserver (352) zur Verfügbarkeit der zweiten spezifischen Netzscheibe und zu den Bedingungen an der zweiten spezifischen Netzscheibe abfragt (503), und wobei der weitere Netzscheiben-Fähigkeits-Aktivierungsserver (352)
- die Notwendigkeit einer Lebenszyklusänderung der Netzscheibe im Zielbereich der Netzscheibe des zweiten Telekommunikationsnetzes (200) bestimmt (505) und dies in eine Auslöseaktion übersetzt, die eine angeforderte Modifikation der Netzscheibe oder die Erstellung einer neuen Netzscheibe im Zielbereich darstellt, und
- dem Netzscheiben-Fähigkeits-Aktivierungsserver (351) die Verfügbarkeit der zweiten spezifischen Netzscheibe und die Bedingungen an der zweiten spezifischen Netzscheibe sendet (506), und
- die Auslöseaktion als Netzscheiben-Modifikations-Auslöseanfrage an einen Dienstanbieter für Scheiben-Bereitstellungsmanagement im zweiten Telekommunikationsnetz (200) sendet.

2. Verfahren nach Anspruch 1, wobei das erste Telekommunikationsnetz (100) ein öffentliches Landmobilfunknetz oder ein eigenständiges nichtöffentliches Netz ist und wobei das zweite Telekommunikationsnetz (200) ein öffentliches Landmobilfunknetz oder ein eigenständiges nichtöffentliches Netz ist.

3. Verfahren nach einem der vorhergehenden Ansprüche, wobei der Vertikalanwendungsschicht-Server (300) ein anerkannter Nutzer von auf Netzscheiben bezogenen Aktivierungsfähigkeiten hinsichtlich der ersten und der zweiten spezifischen Netzscheibe ist.

4. Verfahren nach einem der vorhergehenden Ansprüche, wobei der Netzscheiben-Fähigkeits-Aktivierungsserver (351) oder der Netzscheiben-Fähigkeits-Aktivierungsserver (351) und der weitere Netzscheiben-Fähigkeits-Aktivierungsserver (352) dem Vertikalanwendungsschicht-Server (300) Unterstützung für das Lebenszyklusmanagement von Netzscheiben bereitstellt bzw. bereitstellen, sowohl hinsichtlich der ersten spezifischen Netzscheibe als auch der zweiten spezifischen Netzscheibe,
wobei insbesondere der Netzscheiben-Fähigkeits-Aktivierungsserver (351) oder sowohl der Netzscheiben-Fähigkeits-Aktivierungsserver (351) als auch der weitere Netzscheiben-Fähigkeits-Aktivierungsserver (352) dabei die jeweiligen Netzkennungen des ersten und des zweiten Telekommunikationsnetzes (100, 200) verwendet bzw. verwenden.

5. System oder Telekommunikationsnetze (100, 200) oder Netzscheiben-Fähigkeits-Aktivierungsdienstanbieter (300') zur Verwendung eines Nutzendgeräts (20) mit einem ersten und einem zweiten Telekommunikationsnetz (100, 200), die unterschiedliche Netzkennungen aufweisen oder verwenden, im Zusammenhang mit oder im Rahmen der Dienst-Enabler-Architekturschicht für Vertikale, SEAL,
wobei das erste und das zweite Telekommunikationsnetz (100, 200) die Möglichkeit bieten, spezifische Netzscheiben zu nutzen, eine erste spezifische Netzscheibe des ersten Telekommunikationsnetzes (100) und eine zweite spezifische Netzscheibe des zweiten Telekommunikationsnetzes (200), über einen Netzscheiben-Fähigkeits-Aktivierungsserver, NSCE-Server, (351) und über einen weiteren Netzscheiben-Fähigkeits-Aktivierungsserver (352) zu einem Vertikalanwendungsschicht-Server, VAL-Server, (300), der ein anerkannter Nutzer von auf Netzscheiben bezogenen Aktivierungsfähigkeiten hinsichtlich der ersten und der zweiten spezifischen Netzscheibe ist, und wobei das Nutzendgerät (20) ein Vertikalanwendungsschicht-Nutzendgerät (20) ist, das einen Vertikalanwendungsschicht-Client, VAL-Client, (21) und einen Netzscheiben-Fähigkeits-Aktivierungsclient, NSCE-Client, (22) umfasst, wobei der Netzscheiben-Fähigkeits-Aktivierungsserver (351) und/oder der weitere Netzscheiben-Fähigkeits-Aktivierungsserver (352) Teil eines Netzscheiben-Fähigkeits-Aktivierungsdienstanbieters (300') ist oder mit diesem verbunden ist und mit dem ersten Telekommunikationsnetz (100) und dem zweiten Telekommunikationsnetz (200) jeweils über deren Betriebs- und Wartungsschnittstelle und/oder Netzexpositionsfunktions-Schnittstelle (3511, 3512) verbunden ist,
wobei das Nutzendgerät (20) eine native Subskription zum ersten Telekommunikationsnetz (100) besitzt, jedoch keine native Subskription zum zweiten Telekommunikationsnetz (200) hat,
wobei, um Dienstkontinuität auch für den Fall zu gewährleisten, dass das Nutzendgerät (20) ausschließlich über das zweite Telekommunikationsnetz (200) verbunden ist, das System oder die Telekommunikationsnetze (100, 200) oder der Netzscheiben-Fähigkeits-Aktivierungsdienstanbieter (300') derart konfiguriert ist, dass:
- der Vertikalanwendungsschicht-Server (300) eine Nachricht an den Netzscheiben-Fähigkeits-Aktivierungsserver (351) übermittelt und dabei eine Anforderungsanfrage zur Anwendungsdienstkontinuität stellt;
- der Netzscheiben-Fähigkeits-Aktivierungsserver (351) mit dem ersten Telekommunikationsnetz (100), dem zweiten Telekommunikationsnetz (200), dem Nutzendgerät (20) und dem weiteren Netzscheiben-Fähigkeits-Aktivierungsserver (352) im Hinblick auf die Realisierung von Anwendungsdienstkontinuität für das Nutzendgerät (20) interagiert, wobei die Interaktion zwischen dem Netzscheiben-Fähigkeits-Aktivierungsserver (351) und dem ersten und zweiten Telekommunikationsnetz (100, 200) jeweils über deren Betriebs- und Wartungsschnittstelle und/oder Netzexpositionsfunktions-Schnittstelle (3511, 3512) erfolgt, wobei der Netzscheiben-Fähigkeits-Aktivierungsserver (351) den weiteren Netzscheiben-Fähigkeits-Aktivierungsserver (352) zur Verfügbarkeit der zweiten spezifischen Netzscheibe und zu den Bedingungen an der zweiten spezifischen Netzscheibe abfragt (503), und wobei der weitere Netzscheiben-Fähigkeits-Aktivierungsserver (352)
- die Notwendigkeit einer Lebenszyklusänderung der Netzscheibe im Zielbereich der Netzscheibe des zweiten Telekommunikationsnetzes (200) bestimmt (505) und dies in eine Auslöseaktion übersetzt, die eine angeforderte Modifikation der Netzscheibe oder die Erstellung einer neuen Netzscheibe im Zielbereich darstellt, und
- dem Netzscheiben-Fähigkeits-Aktivierungsserver (351) die Verfügbarkeit der zweiten spezifischen Netzscheibe und die Bedingungen an der zweiten spezifischen Netzscheibe sendet (506), und
- die Auslöseaktion als Netzscheiben-Modifikations-Auslöseanfrage an einen Dienstanbieter für Scheiben-Bereitstellungsmanagement im zweiten Telekommunikationsnetz (200) sendet.

6. Programm, das einen computerlesbaren Programmcode umfasst, der, wenn er auf einem Computer und/oder auf einem Nutzendgerät (20) und/oder auf einem Netzknoten eines ersten Telekommunikationsnetzes (100) und/oder auf einem Netzknoten eines zweiten Telekommunikationsnetzes (200) und/oder auf einem Netzknoten eines Netzscheiben-Fähigkeits-Aktivierungsdienstanbieters (300') ausgeführt wird, oder teilweise auf dem Nutzendgerät (20) und/oder teilweise auf dem Netzknoten des ersten Telekommunikationsnetzes (100) und/oder teilweise auf dem Netzknoten des zweiten Telekommunikationsnetzes (200) und/oder teilweise auf dem Netzknoten des Netzscheiben-Fähigkeits-Aktivierungsdienstanbieters (300'), den Computer und/oder das Nutzendgerät (20) und/oder den Netzknoten des ersten Telekommunikationsnetzes (100) und/oder den Netzknoten des zweiten Telekommunikationsnetzes (200) und/oder den Netzknoten des Netzscheiben-Fähigkeits-Aktivierungsdienstanbieters (300') veranlasst, ein Verfahren nach einem der Ansprüche 1 bis 4 auszuführen.

7. Computerlesbares Medium, das Anweisungen umfasst, die, wenn sie auf einem Computer und/oder auf einem Nutzendgerät (20) und/oder auf einem Netzknoten eines ersten Telekommunikationsnetzes (100) und/oder auf einem Netzknoten eines zweiten Telekommunikationsnetzes (200) und/oder auf einem Netzknoten eines Netzscheiben-Fähigkeits-Aktivierungsdienstanbieters (300') ausgeführt werden, oder teilweise auf dem Nutzendgerät (20) und/oder teilweise auf dem Netzknoten des ersten Telekommunikationsnetzes (100) und/oder teilweise auf dem Netzknoten des zweiten Telekommunikationsnetzes (200) und/oder teilweise auf dem Netzknoten des Netzscheiben-Fähigkeits-Aktivierungsdienstanbieters (300'), den Computer und/oder das Nutzendgerät (20) und/oder den Netzknoten des ersten Telekommunikationsnetzes (100) und/oder den Netzknoten des zweiten Telekommunikationsnetzes (200) und/oder den Netzknoten des Netzscheiben-Fähigkeits-Aktivierungsdienstanbieters (300') veranlassen, ein Verfahren nach einem der Ansprüche 1 bis 4 auszuführen.

## Revendications

1. Procédé d'utilisation d'un équipement utilisateur (20) avec un premier et un second réseau de télécommunications (100, 200) ayant, ou utilisant, des identifiants de réseau différents en rapport avec ou dans le cadre de la couche d'architecture d'activation de services pour les secteurs verticaux, SEAL,
dans lequel le premier et le second réseau de télécommunications (100, 200) offrent la possibilité d'utiliser des tranches de réseau spécifiques, une première tranche de réseau spécifique du premier réseau de télécommunications (100) et une seconde tranche de réseau spécifique du second réseau de télécommunications (200), par l'intermédiaire d'un serveur d'activation des capacités de tranche de réseau, serveur NSCE, (351), et par l'intermédiaire d'un autre serveur d'activation des capacités de tranche de réseau (352), vers un serveur de couche applicative verticale, serveur VAL, (300), et dans lequel l'équipement utilisateur (20) est un équipement utilisateur de couche applicative verticale (20) comprenant un client de couche applicative verticale, client VAL, (21) et un client d'activation des capacités de tranche de réseau, client NSCE, (22), le serveur d'activation des capacités de tranche de réseau (351) et/ou l'autre serveur d'activation des capacités de tranche de réseau (352) faisant partie d'un fournisseur de services d'activation des capacités de tranche de réseau (300') ou lui étant associé, et étant connecté à la fois au premier réseau de télécommunications (100) et au second réseau de télécommunications (200) par l'intermédiaire de leurs interfaces d'exploitation et de maintenance et/ou interfaces de fonction d'exposition du réseau (3511, 3512) respectives,
dans lequel l'équipement utilisateur (20) dispose d'un abonnement natif au premier réseau de télécommunications (100) mais ne dispose pas d'abonnement natif au second réseau de télécommunications (200),
dans lequel, afin de réaliser la continuité de service même dans le cas où l'équipement utilisateur (20) est connecté uniquement par l'intermédiaire du second réseau de télécommunications (200), le procédé comprend les étapes suivantes :
- dans une première étape (501), le serveur de couche applicative verticale (300) transmet un message au serveur d'activation des capacités de tranche de réseau (351), sollicitant ainsi une demande d'exigence de continuité de service applicatif en raison d'une mobilité de l'équipement utilisateur prédite depuis la zone de service source ;
- dans une seconde étape, le serveur d'activation des capacités de tranche de réseau (351) interagit avec le premier réseau de télécommunications (100), le second réseau de télécommunications (200), l'équipement utilisateur (20) et l'autre serveur d'activation des capacités de tranche de réseau (352) en vue de réaliser la continuité de service applicatif pour l'équipement utilisateur (20), l'interaction entre le serveur d'activation des capacités de tranche de réseau (351) et les premier et second réseaux de télécommunications (100, 200) ainsi que l'autre serveur d'activation des capacités de tranche de réseau (352) étant effectuée par l'intermédiaire de leurs interfaces d'exploitation et de maintenance et/ou interfaces de fonction d'exposition du réseau (3511, 3512) respectives, le serveur d'activation des capacités de tranche de réseau (351) interrogeant (503) l'autre serveur d'activation des capacités de tranche de réseau (352) sur la disponibilité de la seconde tranche de réseau spécifique et sur les conditions au niveau de la seconde tranche de réseau spécifique, et l'autre serveur d'activation des capacités de tranche de réseau (352)
- déterminant (505) la nécessité d'un changement du cycle de vie de la tranche de réseau au niveau de la zone cible de la tranche de réseau du second réseau de télécommunications (200) et traduisant cela en une action de déclenchement consistant en une modification demandée de la tranche de réseau ou en la création d'une nouvelle tranche de réseau dans la zone cible, et
- envoyant (506) au serveur d'activation des capacités de tranche de réseau (351) la disponibilité de la seconde tranche de réseau spécifique et les conditions au niveau de la seconde tranche de réseau spécifique, et
- envoyant l'action de déclenchement sous la forme d'une demande de déclenchement de modification de tranche de réseau à un producteur de service de gestion d'approvisionnement de tranche au niveau du second réseau de télécommunications (200).

2. Procédé selon la revendication 1, dans lequel le premier réseau de télécommunications (100) est un réseau mobile terrestre public ou un réseau non public autonome, et dans lequel le second réseau de télécommunications (200) est un réseau mobile terrestre public ou un réseau non public autonome.

3. Procédé selon l'une des revendications précédentes, dans lequel le serveur de couche applicative verticale (300) est un utilisateur reconnu des capacités d'activation liées aux tranches de réseau concernant les première et seconde tranches de réseau spécifiques.

4. Procédé selon l'une des revendications précédentes, dans lequel le serveur d'activation des capacités de tranche de réseau (351), ou le serveur d'activation des capacités de tranche de réseau (351) et l'autre serveur d'activation des capacités de tranche de réseau (352), fournit ou fournissent un support de gestion du cycle de vie des tranches de réseau au serveur de couche applicative verticale (300), concernant à la fois la première tranche de réseau spécifique et la seconde tranche de réseau spécifique,
dans lequel notamment le serveur d'activation des capacités de tranche de réseau (351), ou à la fois le serveur d'activation des capacités de tranche de réseau (351) et l'autre serveur d'activation des capacités de tranche de réseau (352), utilise ou utilisent à cet effet les identifiants de réseau respectifs des premier et second réseaux de télécommunications (100, 200).

5. Système ou réseaux de télécommunications (100, 200) ou fournisseur de services d'activation des capacités de tranche de réseau (300') pour l'utilisation d'un équipement utilisateur (20) avec un premier et un second réseau de télécommunications (100, 200) ayant, ou utilisant, des identifiants de réseau différents en rapport avec ou dans le cadre de la couche d'architecture d'activation de services pour les secteurs verticaux, SEAL,
dans lequel le premier et le second réseau de télécommunications (100, 200) offrent la possibilité d'utiliser des tranches de réseau spécifiques, une première tranche de réseau spécifique du premier réseau de télécommunications (100) et une seconde tranche de réseau spécifique du second réseau de télécommunications (200), par l'intermédiaire d'un serveur d'activation des capacités de tranche de réseau, serveur NSCE, (351), et par l'intermédiaire d'un autre serveur d'activation des capacités de tranche de réseau (352), vers un serveur de couche applicative verticale, serveur VAL, (300) qui est un utilisateur reconnu des capacités d'activation liées aux tranches de réseau concernant les première et seconde tranches de réseau spécifiques, et dans lequel l'équipement utilisateur (20) est un équipement utilisateur de couche applicative verticale (20) comprenant un client de couche applicative verticale, client VAL, (21) et un client d'activation des capacités de tranche de réseau, client NSCE, (22), le serveur d'activation des capacités de tranche de réseau (351) et/ou l'autre serveur d'activation des capacités de tranche de réseau (352) faisant partie d'un fournisseur de services d'activation des capacités de tranche de réseau (300') ou lui étant associé, et étant connecté à la fois au premier réseau de télécommunications (100) et au second réseau de télécommunications (200) par l'intermédiaire de leurs interfaces d'exploitation et de maintenance et/ou interfaces de fonction d'exposition du réseau (3511, 3512) respectives,
dans lequel l'équipement utilisateur (20) dispose d'un abonnement natif au premier réseau de télécommunications (100) mais ne dispose pas d'abonnement natif au second réseau de télécommunications (200),
dans lequel, afin de réaliser la continuité de service même dans le cas où l'équipement utilisateur (20) est connecté uniquement par l'intermédiaire du second réseau de télécommunications (200), le système ou les réseaux de télécommunications (100, 200) ou le fournisseur de services d'activation des capacités de tranche de réseau (300') est configuré de telle sorte que :
- le serveur de couche applicative verticale (300) transmet un message au serveur d'activation des capacités de tranche de réseau (351), sollicitant ainsi une demande d'exigence de continuité de service applicatif ;
- le serveur d'activation des capacités de tranche de réseau (351) interagit avec le premier réseau de télécommunications (100), le second réseau de télécommunications (200), l'équipement utilisateur (20) et l'autre serveur d'activation des capacités de tranche de réseau (352) en vue de réaliser la continuité de service applicatif pour l'équipement utilisateur (20), l'interaction entre le serveur d'activation des capacités de tranche de réseau (351) et les premier et second réseaux de télécommunications (100, 200) étant effectuée par l'intermédiaire de leurs interfaces d'exploitation et de maintenance et/ou interfaces de fonction d'exposition du réseau (3511, 3512) respectives, le serveur d'activation des capacités de tranche de réseau (351) interrogeant (503) l'autre serveur d'activation des capacités de tranche de réseau (352) sur la disponibilité de la seconde tranche de réseau spécifique et sur les conditions au niveau de la seconde tranche de réseau spécifique, et l'autre serveur d'activation des capacités de tranche de réseau (352)
- déterminant (505) la nécessité d'un changement du cycle de vie de la tranche de réseau au niveau de la zone cible de la tranche de réseau du second réseau de télécommunications (200) et traduisant cela en une action de déclenchement consistant en une modification demandée de la tranche de réseau ou en la création d'une nouvelle tranche de réseau dans la zone cible, et
- envoyant (506) au serveur d'activation des capacités de tranche de réseau (351) la disponibilité de la seconde tranche de réseau spécifique et les conditions au niveau de la seconde tranche de réseau spécifique, et
- envoyant l'action de déclenchement sous la forme d'une demande de déclenchement de modification de tranche de réseau à un producteur de service de gestion d'approvisionnement de tranche au niveau du second réseau de télécommunications (200).

6. Programme comprenant un code de programme lisible par ordinateur qui, lorsqu'il est exécuté sur un ordinateur et/ou sur un équipement utilisateur (20) et/ou sur un nœud de réseau d'un premier réseau de télécommunications (100) et/ou sur un nœud de réseau d'un second réseau de télécommunications (200) et/ou sur un nœud de réseau d'un fournisseur de services d'activation des capacités de tranche de réseau (300'), ou en partie sur l'équipement utilisateur (20) et/ou en partie sur le nœud de réseau du premier réseau de télécommunications (100) et/ou en partie sur le nœud de réseau du second réseau de télécommunications (200) et/ou en partie sur le nœud de réseau du fournisseur de services d'activation des capacités de tranche de réseau (300'), amène l'ordinateur et/ou l'équipement utilisateur (20) et/ou le nœud de réseau du premier réseau de télécommunications (100) et/ou le nœud de réseau du second réseau de télécommunications (200) et/ou le nœud de réseau du fournisseur de services d'activation des capacités de tranche de réseau (300') à mettre en œuvre un procédé selon l'une des revendications 1 à 4.

7. Support lisible par ordinateur comprenant des instructions qui, lorsqu'elles sont exécutées sur un ordinateur et/ou sur un équipement utilisateur (20) et/ou sur un nœud de réseau d'un premier réseau de télécommunications (100) et/ou sur un nœud de réseau d'un second réseau de télécommunications (200) et/ou sur un nœud de réseau d'un fournisseur de services d'activation des capacités de tranche de réseau (300'), ou en partie sur l'équipement utilisateur (20) et/ou en partie sur le nœud de réseau du premier réseau de télécommunications (100) et/ou en partie sur le nœud de réseau du second réseau de télécommunications (200) et/ou en partie sur le nœud de réseau du fournisseur de services d'activation des capacités de tranche de réseau (300'), amènent l'ordinateur et/ou l'équipement utilisateur (20) et/ou le nœud de réseau du premier réseau de télécommunications (100) et/ou le nœud de réseau du second réseau de télécommunications (200) et/ou le nœud de réseau du fournisseur de services d'activation des capacités de tranche de réseau (300') à mettre en œuvre un procédé selon l'une des revendications 1 à 4.
